# EUROPEAN PATENT SPECIFICATION

(11) **EP 1 692 487 B1**
(45) Date of publication and mention of the grant of the patent: **10.08.2011**
(21) Application number: 04803749.3
(22) Date of filing: 10.12.2004
(51) Int. Cl.: G01N 19/08, B29C 65/00

(54) **VACCUM SENSOR APPLICATION AND METHOD FOR NONDETACHABLY JOINING A SENSOR WORKPIECE TO A BODY COMPONENT**
VAKUUMSENSORANWENDUNG UND VERFAHREN ZUR NICHTABLÖSBAREN VERBINDUNG EINES SENSORWERKSTÜCKS MIT EINER KÖRPERKOMPONENTE
APPLICATION DE DETECTION DE VIDE ET PROCEDE D'ASSEMBLAGE NON AMOVIBLE D'UNE PIECE DETECTEUR A UN COMPOSANT CORPS

(30) Priority: 12.12.2003 DE 10358772; 26.11.2004 DE 102004057290
(43) Date of publication of application: 23.08.2006
(73) Proprietor: Airbus Operations GmbH, 21129 Hamburg (DE)
(72) Inventor: BOCKENHEIMER, Clemens, 66578 Schiffweiler (DE); STEHMEIER, Heiner, 28279 Bremen (DE)
(74) Representative: Dilg, Andreas
(86) International application number: PCT/EP2004/014106
(87) International publication number: WO 2005/059522

(56) References cited:
- DE-A1- 10 056 908
- US-A1- 2002 002 866
- SPECKMANN, H ET AL.: "Structural Health Monitoring (SHM) - Overview on Technologiexs Under Development"[Online] XP002325400 Retrieved from the Internet: URL:http://www.ndt.net/article/wcndt2004/p df/aerospace/563_henrich.pdf> [retrieved on 2005-04-20]

## Description

### Field of the invention

The present invention relates to the field of Structural Health Monitoring (SHM) or vacuum sensors. In particular, the present invention relates to a method of firmly joining a sensor workpiece to a body component, and to a vacuum sensor.

### Technological background

DE 100 56 908 A1 and US 5,571,410 A both describe processes which use laser radiation to produce channel-like structures in components and then close these by laminating or welding a film on. For example, DE 100 56 908 A1 relates to a method for connecting micro-structured plastic components, whereby the adhesive is first applied to a support film, allowed to harden thereon and subsequently transferred to a provided micro-structured component. After adjusting and joining of the components, the adhesive layer is allowed to completely cure.

Further, US 2002/0002866 A1 describes a system for continuously monitoring the integrity of a structure including a sensor pad with a surface provided with a set of first semi-circular or rounded channels and interspersed second channels. The surface is sealingly engaged to the surface of the structure to be monitored so that the channels together with a surface form respective sets of first and second cavities in order to be able to monitor changes and vacuum conditions between.

These processes respectively propose solutions for producing channel-like structures whose fault-free and reproducible use for the implementation of "Structural Health Monitoring" on structures will not be beyond all doubt. In addition, viewed from technological aspects, no efficient implementation of a vacuum sensor application is assumed.

### Summary of the Invention

Accordingly, there may be a need for specifying improved solutions for a vacuum sensor application and a method for non-detachably joining a vacuum sensor to a body component surface, it being e. g. possible for crack finding in joints on a structure to be monitored continuously with the application.

Such vacuum sensor application may be implemented with the method according to an exemplary embodiment of the present invention in an efficient manner and without additional effort on reworking, the intention being to achieve fault-free and reproducible use for the implementation of "Structural Health Monitoring" on structures.

It is believed that by the features as specified in claims 1, 15, 47 and 48, an improved sensor or method may be provided, which is believed to meet the above need. Expedient refinements and development of these measures are specified in the further claims.

The invention relates to a vacuum sensor application for the implementation of "Structural Health Monitoring" (SHM) and a method for nondetachably joining a sensor workpiece to a body component. A vacuum sensor application and a method for its implementation are specified with which a secure and reproducible application of vacuum sensor technology using vacuum sensors for crack detection during mechanical tests on "coupon", "component" and "full scale" test items under test and also "Structural Health Monitoring" (SHM) on structures are implemented, in order to monitor the action of finding cracks in joints, for example in aircraft operation. This vacuum sensor application will be able to be implemented in an efficient manner without additional effort on reworking in any process, the application guaranteeing fault-free and reproducible use, which is assisted by vastly improved adhesive properties of the structure-monitoring vacuum sensors.

### Detailed description of exemplary embodiments

The invention will be described in more detail with reference to exemplary embodiments using the appended drawings, in which:
Fig. 1 shows a sectional view of a vacuum sensor arrangment;
Fig. 2a shows a longitudinal section of an individual sensor workpiece according to an exemplary embodiment of the present invention (unrolled sensor material, extended embodiment);
Fig. 2b shows the sensor workpiece according to Fig. 1 with a contact adhesive laminated onto the sensor contact surface according to an exemplary embodiment of the present invention;
Fig. 2c shows the adhesive-laminated sensor workpiece according to Fig. 2b with the removed galleries according to an exemplary embodiment of the present invention;
Fig. 2d shows the adhesive-laminated sensor workpiece positioned on a body component with the architecture of removed galleries according to Fig. 2c according to an exemplary embodiment of the present invention;
Fig. 3 shows the adhesive-laminated sensor workpiece according to Fig. 2b with the arrangement of various types of removed galleries according to an exemplary embodiment of the present invention;
Fig. 4 shows the adhesive-laminated sensor workpiece according to Fig. 2b with the modified arrangement of various types of removed galleries according to an exemplary embodiment of the present invention.

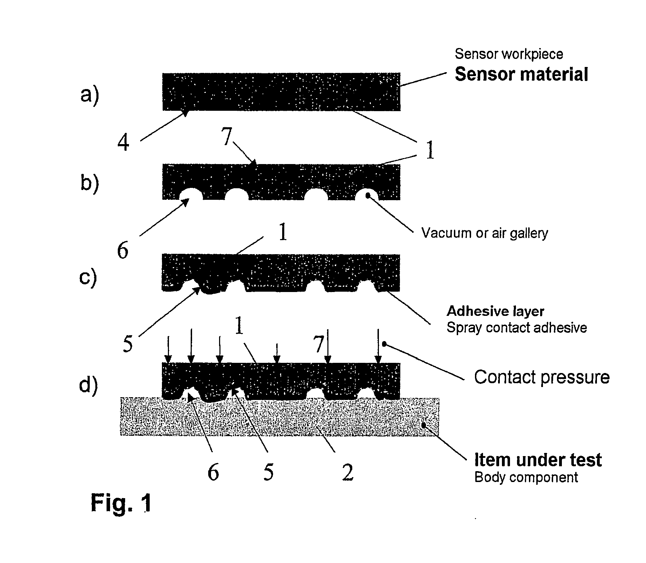

The application of vacuum sensors for finding cracks in the joints on structures (structural surfaces) may be implemented in the following way as shown in Fig. 1. Firstly, the vacuum and air galleries are introduced into the sensor workpiece (sensor material), that is to say into the surface of the sensor, with the aid of laser lithography, following the pattern of figures 1a, 1b. After that, the application of the non-crosslinked adhesive is applied to the lithographed surface in a spray process following the pattern of fig. 1c. In this way, the galleries (vacuum and air galleries) are filled with adhesive to a good extent. As a result of the adhesive application in the spray process, only the use of a non-crosslinked adhesive is possible. In addition, the application of adhesive by lithography limits the maximum layer thickness of adhesive, since otherwise the vacuum and air galleries would be blocked. The adhesive bonding of the sensor to the surface of the item under test is illustrated in fig. 1d, although this can be carried out only under an undefined and non-reproducible contact pressure.

In the application phase, the vacuum sensors are loaded dynamically-mechanically in a complex way in the joints. Here, leakage and blocking of the vacuum and air galleries frequently occurs in the bonded connections between sensor and surface of the item under test. The occurrence of leaks can be traced back to a) the excessively low layer thickness of the contact adhesive, which reduces the dynamic adhesion of the contact adhesive to the surface of the joint parts under the loading which occurs, b) to the increased tendency of the non-crosslinked spray adhesive to creep, c) to the undefined and non-reproducible contact pressure, which causes excessively weak and undefined adhesion of the contact adhesive to the surface of the joint parts. The blockages are triggered by a) the non-crosslinked contact adhesive flowing into the vacuum and air galleries and b) by the adhesive already present in the vacuum and air galleries under the action of the riveting forces or an excessively high contact pressure during the adhesive bonding of the sensors.

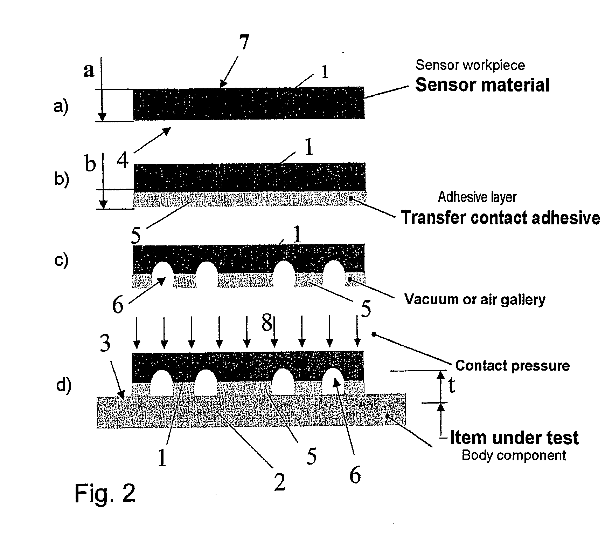

The following explanations relate initially to the presentation of a method for non-detachably joining a sensor workpiece 1 to a body component 2, in which the sensor workpiece 1 is positioned on a body component surface region 3. This sensor workpiece 1 is intended to be joined nondetachably to the body component 2 within a defined region of the body component surface. This sensor workpiece 1, which is shown in fig. 2a, is composed of a sensor material which is suitable for the implementation of the sensor function of a vacuum sensor.

The method proposed comprises the following steps, specified generally. Accordingly, first of all a) it is proposed that, onto what is known as a sensor contact surface 4 of the sensor workpiece 1, an adhesive layer 5 is laminated which, with a view of fig. 2b, rests evenly on the surface. This adhesive layer 5 is composed of an (already) crosslinked transfer contact adhesive, which is implemented with a defined layer thickness. The transfer contact adhesive itself can be obtained from the provider with a variable layer thickness, which is supplied on what is known as a transfer roll. According to a further step b), the patterns of a plurality of galleries 6, what are known as vacuum and/or air galleries, are transferred to an adhesive-laminated sensor contact surface 4 [onto the adhesive-laminated surface region of a contact surface] of the sensor workpiece 1, following the pattern of fig. 2c, by applying known radiation methods, for example with the aid of laser lithography, directly by using a light beam, for example a laser beam, which passes through the adhesive layer 5 [that is to say penetrating through the transfer contact adhesive], and is (subsequently) introduced into the sensor workpiece 1. In the process, the geometric patterns of those galleries 6 are removed so as to coincide with the structures of the adhesive layer 5 introduced into the sensor workpiece 1. These so-called galleries 6, which are machined into the aforementioned sensor contact surface 4 lying parallel beside one another, generally have a uniform gallery cross section of, for example, a parabolic form, the opening of the parabola terminating the sensor contact surface 4.

It would also be conceivable, however, for those galleries 6 to be machined into the sensor workpiece 1 with a different geometric configuration and different gallery cross section. There is also the possibility that the patterns of the galleries 6 are projected indirectly on to the sensor contact surface 4 (surface) with the aid of masks and, in the process, by using the requisite number of light passes (laser beam passes) being introduced into the sensor contact surface 4 or respectively removed from the sensor contact surface 4, which will not be explained in more detail.

After that, a further step c) may be implemented, according to which the sensor workpiece 1 with the adhesive-laminated sensor contact surface 4 is arranged on a defined surface region of the body component surface 3. Finally, a step d) is implemented, according to which a mechanically acting contact pressure 8 is subsequently exerted on the two joint partners (sensor workpiece 1 and body component 2), with which the adhesive-laminated sensor contact surface 4 and the body component surface region 3 are pressed together.

This general illustration is expanded by the following measures. For example, it is proposed that, following step b) with a subsequent step f), the sensor workpiece 1 executed with the adhesive-laminated patterned sensor contact surface 4 be subjected in a drying cabinet to what is known as annealing, as a result of which the (homogeneous) adhesion between the transfer contact region and the adhesive-laminated sensor contact surface 4 (laminated to the latter) is maximized. The measure intended [expediently] with step f) will follow the implementation of step c). In addition, it is recommended that, before step c), coarse and/or fine cleaning of the body component surface region 3 is carried out, since an unclean (contaminated) body component contact surface 3 will certainly hardly benefit the nondetachable joining of the two joint partners, which is completed following the conclusion of the measure according to step d). In addition, in order to improve (maximize) the adhesion just mentioned between the transfer contact adhesive and the adhesive-laminated sensor contact surface 4 (laminated with the latter), it is proposed that, before step d), the galleries 6 are closed in an airtight manner on one side and those galleries 6 are connected on the other side to a vacuum device or vacuum pump, so that a vacuum is then generated within the galleries 6. Since provision is made for the step d) to be implemented with the aid of a clamping device (which clamps around the two joint partners), a contact pressure 8 which is produced by pressing the contact surfaces of the two joint partners by means of the clamping device will be increased, given simultaneous application of the clamping device and the vacuum device, as far as a defined vacuum (generated by the vacuum device), which should be maintained for at least ten minutes.

Further expedient exemplary embodiments and developments of these measures will be added to these aforementioned measures. For example, provision is made that, according to step a), the adhesive layer 5 is implemented with a defined and constant layer thickness, which is laminated onto the sensor contact surface 4. It will also be mentioned that the unrolling of the transfer contact adhesive from a transfer roll will be carried out before step a).

Only after that will the lamination of the adhesive layer 5 [according to step a)] be implemented with a manual laminating roll, for example, with which the adhesive layer 5 is rolled onto one side of the sensor workpiece 1 under slight pressure. Using this measure, the intention is for inclusions of air bubbles between the sensor contact service 4 and the transfer contact adhesive to be prevented. The laminating operation, which is implemented with the aid of said manual laminating roll, should [just - according to a step e)] be repeated with an electrically operated laminating device, in which the transfer contact adhesive is unrolled from the transfer roll with a defined roll speed to the electrically operated laminating device and then rolled on under a defined contact pressure 8. By this means, homogeneous adhesion between the transfer contact adhesive and the sensor contact surface 4 can be ensured.

It is also proposed that step b) is implemented using laser lithography. In this case, the geometric patterns of the galleries 6 are transferred to the adhesive-laminated sensor contact surface 4 directly by means of a controllable laser beam from a movable laser source, said patterns being introduced into the sensor workpiece 1 with a configuration which extends three-dimensionally (viewed geometrically). Otherwise, there is also the possibility for those patterns of the galleries 6 to be projected onto the adhesive-laminated sensor surface 4 indirectly with the aid of the laser with the interposition of masks, but this procedure will not be considered in more detail.

The gallery cross section of the individual gallery 6 (what is known as the vacuum or air gallery) will generally correspond to that of a body of rotation, which will terminate rectilinearly at the sensor contact surface 4 of the sensor workpiece 1. In this case, said gallery cross section could be implemented with a parabolic or square or rectangular form, the gallery cross section being cut out rectilinearly from the sensor contact surface 7 and the galleries 6 arranged beside one another being arranged in a laminar fashion. In this case, the laser beam (employed when the lithography method is used) which will penetrate through the transfer adhesive will cut out the galleries 6 lithographically from the sensor workpiece 1 with a removal depth t, which is influenced by the intensity of the laser beam, which is regulated by a laser source addressing the laser beam, and the speed of travel of the laser source. The laser source is moved three-dimensionally (that is to say in all three directions of the Cartesian coordinate system). In addition, in correlation with the controllable laser beam intensity, there is therefore also the option of laminating the transfer contact adhesive onto the sensor contact surface 4 with a freely selectable layer thickness by means of readjusting and/or bringing the laser source up to the adhesive application.

Furthermore, it is added that step d) is implemented with a clamping device, by means of whose external clamping of the two joint partners a defined contact pressure 8 is transferred to the contact surfaces of the joint partners, whose front surfaces are opposite one another, and on the adhesive layer 5 layered in between. In this case, the even contact with the sensor workpiece 1 over its contact surface 4 will be loaded uniformly. In summary, a method for nondetachably joining a sensor workpiece 1 to a body component 2 may be specified, with which an application of vacuum sensors advantageously becomes available.

The method substantially comprises the following steps, according to which, first of all, a crosslinked transfer contact adhesive is laminated onto the sensor workpiece 1 (sensor material) (figs 2a, 2b). After that, the galleries 6 (air and/or vacuum galleries) are introduced into the sensor material of the sensor workpiece 1 lying underneath with the aid of laser lithography through the adhesive layer 5 (fig. 2c). The sensor (sensor workpiece 1) is bonded to the body component surface region 3 of a body component 2 or to the surface of an item under test with the assistance of a specific clamping method which makes it possible for the sensor workpiece 1, designated the sensor, to make flat contact on the body component 2 with a defined contact pressure 8 (fig. 2d). The invention is (expediently) suitable for the permanent and reproducible use of the vacuum sensors for crack detection during mechanical tests on "coupon", "component" and "full scale" items under test and within the context of "Structural Health Monitoring" (SHM) in aircraft operation. The proposed procedure leads to vastly improved adhesive properties of the vacuum sensors and thus guarantees their fault-free and reproducible use.

Using the method proposed, the following causal relationships appear.
· The transfer process may permit the application of a crosslinked contact adhesive. Because of its crosslinking, the tendency of the contact adhesive to creep may be minimized.
· The constant layer thickness of the transfer contact adhesive may ensure homogeneous dynamic-mechanical properties of the adhesive layer between sensor and item under test surface.
· As a result of the adhesive thickness, which can be chosen variably as desired, the interaction between adhesive and joint part surface can be adjusted (optimally) in the sense of the dynamic-mechanical adhesion.
· On account of the subsequent laser lithography to the application of adhesive, there are less or essentially no adhesive residues in the vacuum and air galleries.
· The adhesive bonding of the sensors with a defined and reproducible contact pressure may ensure essentially homogeneous and good adhesion between the adhesive and the surface of the item under test.

The application of the vacuum sensors in this way may prevent the occurrence of leakages and blockages of the vacuum and air galleries in the application phase.

In summary, it is believed that improved adhesive properties of the vacuum sensors are achieved by the method. By means of the new procedure in the application of vacuum sensors to crack detection in joints, the intention is to "guarantee" that the sensors operate in a fault-free and reproducible manner and have a long lifetime.

In addition, a vacuum sensor application, whose implementation in accordance with the method previously explained is proposed, will now be considered in more detail.

A vacuum sensor application or a vacuum sensor for monitoring structural integrity, precisely for "Structural Health Monitoring" (as it is designated and known in specialist circles), will be presented, in which a sensor workpiece 1 is positioned on a body component surface region 3 of a body component 2. This sensor workpiece 1 is connected nondetachably, seamlessly or firmly to said body component 2 within a defined region of the body component surface. The sensor workpiece 1, which is shown in fig. 2a, is composed of a sensor material which is suitable for the implementation of the sensor functions of a vacuum sensor.

The structure of said vacuum sensor application - with a view of fig. 2d - accordingly (considered generally) comprises said aforementioned body component 2, on which a sensor workpiece 1 positioned within a defined region of the even body component surface region 3 (an even body component surface) is nondetachably joined to the body component 2. An adhesive layer 5 is laminated to the sensor workpiece 1 on an even sensor contact surface 4. This adhesive layer 5 is placed on the sensor contact surface 4 so as to be distributed homogeneously. Furthermore, in correlation with fig. 2c, it can be gathered from fig. 2d that the geometric patterns of a plurality of galleries 6 are introduced into the sensor workpiece 1 (are removed), being removed so as to coincide with the structures of the adhesive layer 5 introduced into the adhesive-laminated sensor workspace 1. These galleries 6 are arranged to lie beside one another in a laminar fashion. They are implemented by using known radiation methods, preferably with the aid of laser lithography, by using a light beam, preferably a laser beam.

The sensor workpiece 1, which is illustrated on its own in fig. 1, is box-like or layer-like, a box shape or a cube shape (not illustrated separately) [as a special form of a box] being closer to reality.

The sensor contact surface 4 arranged underneath the sensor workpiece 1 will accordingly have a rectangular or square shape. According to the pattern of fig. 2c, the sensor contact surface 4 of the sensor workpiece 1 is coated with the adhesive layer 5. The adhesive layer 5 is applied to the sensor contact surface 4 with a tool suitable for the purpose, the surface of the adhesive layer 5 which is able to adhere accordingly being square or rectangular and being layered virtually congruently with the sensor contact surface 4. Therefore, a layer structure is implemented in which the height of the sensor workpiece 1 or the distance between the bottom and top surface of the sensor workpiece 1 of the box-like or cube-like shape or the layer thickness a of a sensor workpiece 1 formed in the manner of a layer, for example, is greater than the layer thickness b of the adhesive layer 5.

Returning to the galleries 6 mentioned previously, it is additionally explained that the individual gallery 6 is implemented with a removal depth t which is limited by said body component surface region 3 of the body component 2 and is continued into the sensor workpiece 1.
For example, one embodiment of the galleries 6 which have a uniform appearance can be gathered from figures 2c and 2d. This type of gallery 6 is removed vertically with respect to the top or bottom surface of the sensor workpiece 1, presented by way of example, of the shape of a box, whose gallery cross section corresponds to that of a parabola (open downward - toward the adhesive layer 5). The removal direction of those exemplary galleries 6 will take place in the direction of the abscissa of the parabola, those exemplary galleries 6 being removed with a removable depth t which (already) begins at the exposed surface of the adhesive layer 5 of the aforementioned layer structure that is capable of adhering and will end at the origin of the parabola on the abscissa within the sensor workpiece 1.

On the other hand, embodiments of galleries 6 having different types of geometric configuration and a different gallery cross section are conceivable, being machined into the sensor workpiece 1 and led through the adhesive layer 5. Here, appropriate galleries 6 are imagined whose geometric configuration (based on the pattern of an individual gallery 6) is machined into the sensor workpiece 1 with a gallery cross section which is not square or rectangular but comparable with a non-cylindrical longitudinal section. Galleries 6 of this type will have a physically variable gallery cross section which is machined into the sensor workpiece 1.

On the other hand, galleries 6 which have a uniform geometric configuration are machined into the sensor workpiece 1 with a uniform gallery cross section. One conceivable embodiment, which relates to the exemplary pattern according to figures 2c and 2d, is given in the case of an implementation of the uniform gallery cross section with a parabolic cross-sectional shape, the opening of the parabola, passing through the sensor contact surface 4, terminating at the surface of the adhesive layer 5 of the aforementioned layer structure which is capable of adhering in accordance with the pattern of fig. 2c.

Another exemplary embodiment of galleries 6 takes account of the fact that the uniform gallery cross section of an individual gallery 6 is implemented with a triangular cross-sectional shape, the opening of the triangle, which is arranged opposite the angle enclosed by the two sides of the triangle, ending with the sensor contact surface 4. In this case, the implementation of a triangular cross-sectional shape with the configuration of an equilateral triangle will be thought of.

In addition, a further embodiment of galleries 6 whose uniform gallery cross section is implemented with a trapezoidal cross-sectional shape will be taken appropriately into account; the opening of the trapezium, which is arranged opposite the top surface of the trapezium, should end with the sensor contact surface 4.

The arrangement of those galleries 6 which are let into the layer structure in a plurality and which as a rule will have a uniform gallery cross section will be taken into account in the overall product, that is to say the vacuum sensor application, with a gallery architecture according to which the course of the galleries introduced is implemented with the sides parallel to the longitudinal or broad side or extending transversely with respect to the congruently located layers of the layer structure, without any gallery crossing.

As a rule, as can be seen from figures 2a to 2d, a gallery course parallel to the side or the longitudinal side or broad side is implemented, since a gallery course chosen to run transversely in this respect with respect to the congruently located layers of the layer structure, which is expediently implemented without any crossing of the galleries 6, will certainly rather form the exception.

With regard to the aforementioned adhesive layer 5, it is further added that this is generally implemented uniformly and preferably with a low layer thickness b in such a way that the layer thickness b of the adhesive layer 5 is implemented with a thin layer application.

Of course, the adhesive layer 5 can also be implemented with a thicker layer thickness b which is thicker than said thin layer thickness b; only then, possibly further special measures must be taken which will correlate with the capabilities of the adhesive used, for example its viscosity, its flow behavior, its temperature resistance, its resistance with respect to the nearer environment at the place of use, etc. and/or with further local precautions at the location at which the layer arrangement is put in place within said defined position region on the even body component surface of the body component 2, in order that no adhesive or other undesired deposits or other solid particles etc. penetrate into the gallery 6 (for reasons of cleanness or, respectively, ensuring said promised fault-free and reproducible mode of operation of the vacuum sensor application), as a result of which blockages or contamination of the open (free) gallery cross section will occur.

The adhesive layer 5 is generally implemented with a contact adhesive, preferably a transfer contact adhesive that can be laminated. The general statement: "contact adhesive" is chosen because other types of adhesive which adhere on contact and which are not considered in the following text can be entirely suitable for implementing the adhesive layer 5 on account of their characteristics and their technological handling but will not be discussed in more detail.

By way of example, as based on figures 2b to 2d and 3 and 4, it is proposed that the adhesive layer 5 is implemented with a crosslinked transfer contact adhesive with little tendency to creep. This transfer adhesive should be made capable of implementing adhesion between the sensor workpiece 1 (the sensor contact surface 4 of the sensor workpiece 1) and the body component 2 (the body component surface region 3 of the body component 2). Using this, increased cohesion of the two joint partners (sensor workpiece 1 and body component 2) at the joints by means of a nondetachable joint is implemented.

The adhesive layer 5 may be implemented with a crosslinked transfer contact adhesive with little tendency to creep, which is capable of implementing sufficiently high adhesion for the firm and weathering-independent cohesion of the joint partners between the sensor workpiece 1 at the sensor contact surface 4 and the body component 2 at the body component surface region 3.

The transfer contact adhesive is capable of developing, at the contact surfaces of the sensor contact surface 4 and at the body component surface region 3, a dynamic-mechanical and homogeneous adhesion which is implemented with an adhesive force (in the peel test) of 20 to 50 N/25 mm.

The transfer contact adhesive is an adhesive which can be unrolled, can be unrolled from a transfer roll and is arranged (deposited) on the even surface of the sensor workpiece 1 or on the bottom box surface of the sensor workpiece 1, using aids suitable for the purpose. This adhesive is localized with a defined and constant layer thickness b which is suitable for being nondetachably joined to the body component surface region 3 of the body component 2, which is implemented under the influence of a defined and reproducible contact pressure acting on the two joint partners. An acrylate contact adhesive, which should have a layer thickness b of about 25 µm, is proposed for the use.

The aforementioned sensor material of the sensor workpiece 1 relates to a polymer material, whose use preferably with a polyimide is envisaged. With regard to the latter, the use of what is known as Kapton film is proposed, which is implemented with a film thickness of about 125 µm.

For the purpose of introducing (removing) all the aforementioned galleries 6 and more, which will be discussed later, use is made of a laser beam which, for example, is provided by a pulsed excimer beam. The excimer beam is aimed at the adhesive-laminated sensor workpiece 1 with a pulse energy of about 400 mJ.

With a glance at figures 2c and 2d, in order to remove the galleries 6 of parabolic (uniform) gallery cross section, said excimer beam used is preferably placed vertically on the sensor contact surface 4. In this case, the excimer beam could also be placed at various angles of attack with respect to the sensor contact surface 4 if (if required) various types of galleries of, for example, different configurations (for whatever reasons) laminated uniformly are to be removed. An angle of attack is considered which is specified with an angular range from -45° to +45°, which the laser beam will form with the sensor contact surface.

The transfer adhesive of the adhesive layer 5 used has the capability, under the influence of the penetrating light beam, of cutting out the transfer contact adhesive with the passage cross section of the light beam at the point of passage of the light over the layer thickness b of the transfer adhesive as a result of residue-free adhesive evaporation without microscopic adhesive residue.

Mention is also made of the fact that the gallery depth corresponding to the removal depth t of those galleries 6 of uniform geometric configuration is implemented at about 100 µm, which is subsumed by the layer thickness b of the adhesive layer 5 and which is determined by the depth of the relevant gallery 6 removed within the sensor workpiece 1.

By way of example, the depth of the relevant gallery 6 removed within the sensor workpiece 1 should be implemented with 75 µm.

The use of the vacuum sensor application is seen, for example, predominantly on a body component 2 whose material relates to an appropriate metal (of a generally designated type) or a metal laminate. Added to this, uses on a composite material are realistic. Thought is also given to the fact that the surfaces of the metallic materials are coated with a layer of bonding primer or ink. This body component 2, specified as an item under test, counts as having to be monitored by means of suitable "Structural Health Monitoring", in order for example, as based on the different types of materials of the structure(s) of an aircraft, to detect the formation of cracks in good time on the aircraft structure and, respectively, to implement the finding of cracks in joints during aircraft operation taking place, and by means of those vacuum/air sensors which are embodied with those galleries (vacuum and air galleries).

It remains to mention the fact that the following embodiments of a vacuum sensor application which differ with regard to the design already presented should be of interest. The latter is in accordance with the two further proposed applications of the structure according to which these two embodiments of a vacuum sensor application for "Structural Health Monitoring" are likewise implemented with a body component 2 on which a sensor workpiece 1, to which an adhesive layer 5 is laminated on an even sensor contact surface 4 and is put in place so as to be distributed essentially homogeneously there, is positioned within a defined region of an even body component surface and is nondetachably joined to the body component 2.

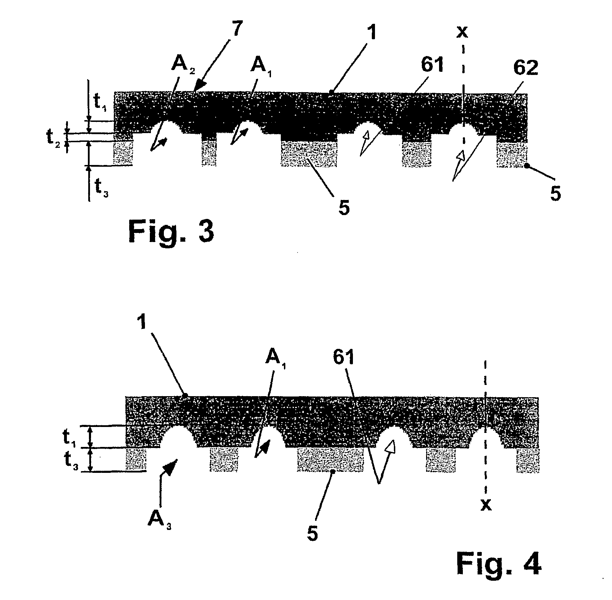

The differences a for further vacuum sensor application consist in the fact that the geometric patterns of a plurality of first galleries 61 of uniform configuration, for example parabolic appearance, having a first gallery cross section A1 and a first removal depth t1, are arranged so as to lie beside one another in a laminar fashion according to fig. 3, and the geometric patterns of a plurality of second galleries 62 of uniform configuration, for example rectangular appearance, having a second (for example rectangular) gallery cross section A2 and a second removal depth t2, which may correlate with the width of the rectangle, are introduced into the sensor workpiece 1.

The first and second galleries 61, 62 are in each case removed along a removal axis x which is perpendicular to a sensor workpiece surface 7. This application takes account of the fact that the first removal depth t1 is greater than the second removal depth t2. Added to this is the fact that the second gallery cross section A2 is implemented so as to be greater than the first gallery cross section A1, the geometric pattern of the individual second gallery 62 with the structure of the adhesive layer 5, introduced into the adhesive-laminated sensor workpiece 1, being removed along said removal axis x with a third removal depth t3, which corresponds to the thickness of the adhesive layer 5.

It is believed that the differences for another vacuum sensor application consist in the fact that the geometric patterns of a plurality of first galleries 61 of uniform configuration are introduced into the sensor workpiece 1 with a first gallery cross section A1 and a first removal depth t1 which, according to fig. 4, are arranged lying beside one another in a laminar fashion, the first galleries 61 in each case being removed along a removal axis x which is perpendicular to a sensor workpiece surface 7. The geometric pattern of the individual first gallery 61 is in each case removed in a stepped manner with the structure introduced into the adhesive-laminated sensor workpiece 1 along said removal axis x with a third removal depth t3, which corresponds to the thickness of the adhesive layer 5, and a third gallery cross section A3, the third removal depth t3 being less than or equal to or greater than the first removal depth t1 and also the third gallery cross section A3 being larger than the first gallery cross section A1.

With regard to the three exemplary embodiments presented for another vacuum sensor application, the following is added. As already indicated, the patterns of a plurality of galleries 6, 61, 62, what are known as the vacuum and/or air galleries, are transferred into the sensor material 1 in accordance with the patterns of fig. 2c by using known radiation methods, for example with the aid of laser lithography, by removing adhesive layer 5 and sensor material. The material removal is carried out by the evaporation of adhesive and sensor material. The depth of the individual gallery is controlled by the number of repetitions of the laser radiation process. The removal rate of the galleries is influenced by the speed of travel, the intensity and the focusing of the laser beam. The width of the galleries is set by the number of repetitions of the laser beam process, in addition to the diameter of focus, with a simultaneous parallel offset of the laser beam track. With layer by layer removal and simultaneously optimized operating parameters (feed speed, diameter of focus, intensity), no macroscopic contaminants remain in the galleries.

In the case of higher compressive loading of the sensor implemented with the gallery, such as for example in the integral application for monitoring cracks between two riveted metal sheets belonging to a structure, it is recommended, depending on the viscosity of the adhesive used, to remove some of the adhesive on both sides of the galleries down to the sensor workpiece 1 in the manner described previously. As a result, the adhesive is offered additional space for volume expansion and the risk of a reduction in the cross section of the galleries is reduced. In addition, in this region worked free of adhesive, in a parallel arrangement to the air or vacuum galleries, additional galleries, which are specified with a second gallery 62 or said third gallery (having a third gallery cross section A3 and a third removal depth t3), what are known as protective galleries, are machined into the sensor workpiece 1 in the manner described above. In the event of higher compressive loading of the sensor implemented with the galleries, these protective galleries offer additional space for the volume expansion of the adhesive and, in this way, counteract the risk of a reduction in a cross section of the galleries by the adhesive.

Added to this is the fact that the alternative measures, which go back to those materials of the elements and their properties (adhesive, sensor and item under test material) proposed for the use and the laser used, which are proposed with regard to the (first) embodiment presented at the beginning for a vacuum sensor application according to figures 2a to 2b, can also be transferred to those embodiments for a vacuum sensor application according to figures 3 and 4, if they are compatible.

With regard to a possible implementation of said vacuum sensor application, at the start of the exemplary embodiments, the impression was given that all the generally specified steps a) to d), which were presented by using the example of said (first) embodiment presented at the start in accordance with figures 2a to 2b, were comprehensible.

In addition, alternative refinements of these steps (specified generally) can be gathered from the above statements.

To the extent that this has not yet been done, it is added to the embodiments that there is also the possibility that the patterns and the galleries 6 are projected onto the sensor contact surface 4 (surface) indirectly with the aid of masks and, in the process, with the required number of light passes (laser beam passes), introduced into the sensor contact surface 4 or, respectively, removed from the sensor contact surface 4, although this will not be discussed in detail.

Following this, a further step c) is implemented, according to which the sensor workpiece 1 with the adhesive-laminated sensor contact surface 4 is arranged on a defined region of the area of the body component surface 3. Finally, a step d) is implemented, according to which a mechanically acting contact pressure 8 is subsequently exerted on both the joint partners (sensor workpiece 1 and body component 2), with which the adhesive-laminated sensor contact surface 4 and the body component surface region 3 are pressed together.

This general illustration may be expanded by the following measures according to further exemplary embodiments of the present invention. For example, it is proposed that the sensor workpiece 1 implemented with the adhesive-laminated patterned sensor contact surface 4 is subjected in a drying cabinet to what is known as annealing, as a result of which the (homogeneous) adhesion between the transfer contact adhesive and the adhesive-laminated sensor contact surface 4 (laminated to the latter) is maximized. A coarse and/or fine cleaning of the body components of this region 3 may be carried out, since an unclean (contaminated) body component contact surface 3 would certainly hardly benefit the nondetachable joining of the two joint partners. In addition, in order to improve (maximize) the adhesion just mentioned between the transfer contact adhesive and the adhesive-laminated sensor contact surface 4 (laminated to the latter) it is proposed that the galleries 6, if appropriate, are closed in an airtight manner on one side and those galleries 6 are connected on the other side to a vacuum device, for example a vacuum pump, so that a vacuum is then generated within the galleries 6.

Since provision is made for the compression of the two joint partners to be implemented with the aid of a clamping device (clamping around the two joints partners), a contact pressure 8, which is produced by pressing on the contact surfaces of the two joint partners by means of the clamping device, is increased, given simultaneous application of the clamping device and the vacuum device, as far as a defined vacuum (generated by the vacuum device), which should be maintained for at least ten minutes.

Mention is also made of the fact that the transfer contact adhesive is unwound from a transfer roll. Only after the transfer contact adhesive has been unrolled is the lamination of the adhesive layer 5 implemented, for example with a manual laminating roll, with which the adhesive layer 5 is rolled onto one side of the sensor workpiece 1 under slight pressure. Using this measure, the intention is for inclusions of air bubbles between the sensor contact service 4 and the transfer contact adhesive to be prevented.

The laminating operation, which is implemented with the aid of said manual laminating roll, should be repeated with an electrically operated laminating device, in which the transfer contact adhesive is unrolled from the transfer roll with a defined roll speed to the electrically operated laminating device and then rolled on under a defined contact pressure 8. By this means, homogeneous adhesion between the transfer contact adhesive and the sensor contact surface 4 can be ensured.

The geometric patterns of the galleries 6 are transferred directly to the sensor contact surface 4 from a movable laser source by means of a controllable laser beam (excimer beam) which (viewed geometrically) is introduced into the sensor workpiece 1 with a configuration extending three-dimensionally. Otherwise, there is also the possibility that the pattern of the galleries 6 is projected onto the sensor workpiece surface 4 with the aid of the laser indirectly with the interposition of masks, but this procedure will not be considered in more detail.

The gallery cross section of the individual gallery 6 (what is known as the vacuum or air gallery) generally corresponds to that of a body of rotation which will terminate rectilinearly at the sensor contact surface 4 of the sensor workpiece 1. In this case, said gallery cross section could theoretically be implemented with any desired form, a non-square or non-rectangular or a parabolic or trapezoidal or else a square or rectangular form preferably being preferred, and the gallery cross section being cut out so as to run rectilinearly (vertically) or with a suitable angle of attack of the sensor contact surface 7. In this case, the laser beam (employed when the lithography process is used) will cut the galleries 6 out of the sensor workpiece 1 lithographically with a removal depth t which is influenced by the intensity of the laser beam, which is controlled by a laser source that addresses the laser beam, and the speed of travel of the laser source. The laser source is moved three-dimensionally (that is to say in all three directions of the Cartesian coordinate system). In addition, in correlation with the controllable laser beam intensity, there is therefore also the option of laminating the transfer contact adhesive onto the sensor contact surface 4 with a freely selectable layer thickness by means of readjusting and/or bringing the laser source up to the adhesive application.

It is further added that the action of pressing the two joint partners together is implemented with a clamping device, by means of whose external clamping of the two joint partners a defined contact pressure 8 is transferred to the contact surfaces of the joint partners, whose front surfaces are opposite one another, and to the adhesive layer 5 layered in between. In this case, the even contact with the sensor workpiece 1 over its contact surface 4 is loaded uniformly.

The invention relates to a vacuum sensor application for the implementation of "Structural Health Monitoring" (SHM) and a method for nondetachably joining a sensor workpiece to a body component according to the preamble of claims 1, 15, 46 and 47. A vacuum sensor application and a method for its implementation are specified with which "Structural Health Monitoring" (SHM) on structures is implemented, in order to monitor the action of finding cracks in joints, for example in aircraft operation, said application being able to be implemented in an efficient manner without additional effort on reworking.

The vacuum sensor application for Structural Health Monitoring has a body component, on which a sensor workpiece, to which an adhesive layer is laminated onto an even sensor contact surface and is placed thereon so as to be distributed homogeneously, is positioned within a defined region of an even body component surface and is nondetachably joined to the body component. The geometric patterns of a plurality of galleries, which are arranged lying beside one another in a laminar fashion, are introduced into the sensor workpiece, and are removed congruently with the structures of the adhesive layer introduced into the adhesive-laminated sensor workpiece.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

### List of reference signs

- 1: Sensor workpiece
- 2: Body component
- 3: Body component surface region
- 4: Sensor contact surface
- 5: Adhesive layer; transfer adhesive
- 6: Gallery/ies
- 61: First gallery
- 62: Second gallery
- 7: Sensor workpiece surface
- 8: Contact pressure

- a: Layer thickness
- b: Layer thickness
- A1: First gallery cross section
- A2: Second gallery cross section
- t: Removal depth
- t1: First removal depth
- t2: Second removal depth
- t3: Third removal depth

## Claims

1. A method of firmly joining a sensor workpiece to a body component, in which the sensor workpiece (1) which comprises a sensor material, is positioned on a body component surface region (3) of the body component (2) and is firmly joined to the body component, which method comprises the steps of:
a) firstly, laminating an adhesive layer (5) which is provided by a cross-linked transfer contact adhesive to a sensor contact surface (4) of the sensor workpiece (1);
b) then, by using known radiation methods, transferring geometric patterns of a plurality of galleries (6) to be arranged in a laminar fashion to the sensor contact surface (4) by a light beam that penetrates the transfer contact adhesive, which are subsequently introduced into the sensor workpiece (1) and, in the process, are removed congruently with the structures of the adhesive layer (5) introduced into the sensor workpiece (1);
c) subsequently arranging the adhesive-laminated patterned sensor contact surface (4) on a defined surface region of the body component surface (3); and
d) subsequently exerting a mechanical pressure on the two joint partners, by which the adhesive-laminated patterned sensor contact surface (4) and the body component surface region (3) are pressed together.

2. The method as claimed in claim 1, wherein, according to step a), the adhesive layer (5) is implemented with a defined constant layer thickness, which is laminated onto the sensor contact surface (4).

3. The method as claimed in claims 1 and 2, wherein step a) is preceded by unrolling the transfer contact adhesive from a transfer roll, which is supplied to a manual laminating roll, so that after that the lamination of the adhesive layer (5) is implemented with said manual laminating roll with which the adhesive layer (5) is rolled on to one side of the sensor workpiece (1) under slight contact pressure in such a way that air bubble inclusions between the sensor contact surface (4) and the transfer contact adhesive are prevented.

4. The method as claimed in claim 3, wherein with a step e) the laminating operation is repeated with an electrically operated laminating device, in which the transfer contact adhesive is unrolled from the transfer film with a defined rolling speed to the electrically operated laminating device and is then rolled on under a defined contact pressure (8) in such a way that an homogeneous adhesion between the transfer contact adhesive and the sensor contact surface (4) is achieved.

5. The method as claimed in claim 4, wherein with a subsequent step f), the sensor workpiece (1) with the adhesive-laminated patterned sensor contact surface (4) is then subjected to annealing in a drying cabinet, by which means the adhesion is maximized.

6. The method as claimed in claim 1, wherein step b) is implemented by using laser lithography in such a way that the geometric patterns of the plurality of galleries (6) are transferred to the adhesive-laminated sensor contact surface (4) directly from a movable laser source by means of a controllable laser beam and are introduced three-dimensionally into the sensor workpiece (1), or are projected onto the adhesive-laminated sensor contact surface (4) indirectly, with the interposition of masks.

7. The method as claimed in claim 6, wherein a geometric pattern of the galleries (6), which will correspond to a vacuum and/or an air gallery, is transferred.

8. The method as claimed in claim 7, wherein a cross section of a respective gallery of the plurality of galleries generally corresponds to that of a body of rotation which ends rectilinearly at the sensor contact surface (4), which is preferably implemented with a parabolic form whose parabola opens toward the sensor contact surface (4), or a square or rectangular form, the gallery cross section being cut out from the sensor contact surface (7) so as to extend rectilinearly; wherein the plurality of galleries consists of at least one of a vacuum gallery and an air gallery.

9. The method as claimed in claim 6, wherein a removal depth (t) of the laser beam passing through the transfer contact adhesive and penetrating into the sensor workpiece (1) is varied on the basis of its intensity and a speed of travel of the laser source.

10. The method as claimed in claim 2 or 6, wherein the laser source is displaced three-dimensionally and the transfer contact adhesive is laminated to the sensor contact surface (4) with a freely selectable layer thickness by means of tracking the laser source to the adhesive application and/or bringing the laser source up to the adhesive application.

11. The method as claimed in claim 1, wherein before step c) coarse and/or fine cleaning of the body component surface region (3) is carried out.

12. The method as claimed in claim 1, wherein step d) is implemented with a clamping device by means of whose external clamping of the two joint partners, a defined contact pressure (8) is transferred to the contact surfaces of each joint partner, whose front faces are opposite one another, and to the adhesive layer (5) layered in between, in such a way that an even contact of the sensor workpiece (1) is loaded uniformly over its contact surface (4).

13. The method as claimed in claim 1, wherein before step d) the plurality of galleries are closed in an airtight manner on one side and, on the other side, are connected to a vacuum device and a vacuum is then generated within the plurality of galleries.

14. The method as claimed in claim 12 or 13, wherein, by using the clamping device and the vacuum device, the contact pressure (8) is increased up to a defined vacuum, which is maintained for at least ten minutes.

15. A vacuum sensor application for Structural Health Monitoring, comprising a body component (2), on which a sensor workpiece (1), to which an adhesive layer (5) is laminated onto an even sensor contact surface (4) and is placed thereon so as to be distributed homogeneously, is positioned within a defined region of an even body component surface and is nondetachably joined to the body component (2), wherein geometric patterns of a plurality of first galleries (61) of uniform configuration with a first gallery cross section (A1) and a first removal depth (t1), which are arranged lying beside one another in a laminar fashion, are introduced into the sensor workpiece (1), the first galleries (61) in each case being removed along a removal axis (x) which is perpendicular to a sensor workpiece surface (8), and the geometric pattern of the individual first gallery (61), in each case with the structure introduced into the adhesive-laminated sensor workpiece (1), being removed in a stepped manner along said removal axis (x) with a third removal depth (t3), which corresponds to the thickness of the adhesive layer (5), and a third gallery cross section (A3), the third removal depth (t3) being less than or equal to or greater than the first removal depth (t1), and the third gallery cross section (A3) being greater than the first gallery cross section (A1).

16. The vacuum sensor application according to claim 15 wherein the geometric patterns of a plurality of first galleries (61) of essentially uniform configuration with the first gallery cross section (A1) and the first removal depth (t1), which are arranged lying beside one another in a laminar fashion, and geometric patterns of a plurality of second galleries (62) of uniform configuration with a second gallery cross section (A2) and a second removal depth (t2) are introduced into the sensor workpiece (1), the first and second galleries (61, 62) in each case being removed along the removal axis (x), and the first removal depth (t1) being greater than the second removal depth (t2) and the second gallery cross section (A2) being greater than the first gallery cross section (A1), and the geometric pattern of the individual second gallery (62), in each case with the structure of the adhesive layer (5) introduced into the adhesive-laminated sensor workpiece (1), being removed along said removal axis (x) with the third removal depth (t3).

## Patentansprüche

1. Verfahren zur festen Verbindung eines Sensorwerkstücks mit einem Körperbauteil, durch welches das Sensorwerkstück (1), welches ein Sensormaterial aufweist, an einen Körperbauteiloberflächenbereich (3) des Körperbauteils (2) positioniert wird und fest mit dem Körperbauteil verbunden wird, aufweisend die Schritte:
a) zunächst, Laminieren einer Klebstoffschicht (5), welche von einem vernetzten Transferkontaktklebstoff an eine Sensorauflagefläche (4) des Sensorwerkstücks (1) bereitgestellt wird;
b) sodann, Übertragen geometrischer Muster einer Vielzahl von Galerien (6) unter Verwendung bekannter Bestrahlungsverfahren, welche Galerien in einer flächigen Weise auf der Sensorauflagefläche (4) durch einen Lichtstrahl, welcher in den Transferkontaktklebstoff eindringt, angeordnet werden, welche anschließend in das Sensorwerkstück (1) eingebracht werden und, im Fortgang entsprechend, mit den in das Sensorwerkstück (1) eingebrachten Strukturen der Klebstoffschicht (5) entfernt werden;
c) darauffolgend Anbringen der klebstoff-laminierten bemusterten Sensorauflagefläche (4) an einen bestimmten Oberflächenbereich der Körperbauteiloberfläche (3); und
d) darauffolgend Anwenden eines mechanischen Drucks auf die zwei zusammengefügten Teile, durch welchen die Klebstoff-laminierte bemusterte Sensorauflagefläche (4) und der Körperbauteiloberflächenbereich (3) gegeneinander gedrückt werden.

2. Verfahren gemäß Anspruch 1, wobei, gemäß Schritt a), die Klebstoffschicht (5) mit einer bestimmten konstanten Schichtdicke ausgeführt ist, welche auf die Sensorauflagefläche (4) laminiert ist.

3. Verfahren gemäß der Ansprüche 1 und 2, wobei dem Schritt a) das Abrollen des Transferkontaktklebstoffes von einer Transferrolle vorangeht, welche einer manuellen Laminierrolle beigestellt ist, so dass danach die Laminierung der Klebstoffschicht (5) mit der manuellen Laminierrolle, mit der die Klebstoffschicht (5) auf eine Seite des Sensorwerkstücks (1) aufgewalzt wird, unter geringem Anpressdruck derart durchgeführt wird, dass Luftblaseneinschlüsse zwischen der Sensorauflagefläche (4) und dem Transferkontaktklebstoff vermieden werden.

4. Verfahren gemäß Anspruch 3, wobei mit einem Schritt e) der Laminiervorgang mit einem elektrisch betriebenen Laminiergerät wiederholt wird, in welchem der Transferkontaktklebstoff von dem Transferfilm mit einer bestimmten Abrollgeschwindigkeit auf das elektrisch betriebene Laminiergerät abgerollt wird und sodann unter einem bestimmten Anpressdruck (8) in einer Weise aufgetragen wird, dass eine gleichmäßige Haftung zwischen dem Transferkontaktklebstoff und der Sensorauflagefläche (4) erreicht wird.

5. Verfahren gemäß Anspruch 4, wobei in einem nachfolgenden Schritt f) das Sensorwerkstück (1) mit der klebstofflaminierten bemusterten Sensorauflagefläche (4) in einer Trockenkammer dem Aushärten ausgesetzt wird, wodurch die Haftung maximiert wird.

6. Verfahren gemäß Anspruch 1, wobei Schritt b) unter Verwendung von Laserlithografie in einer Weise durchgeführt wird, dass die geometrischen Muster der Vielzahl von Galerien (6) auf die klebstofflaminierte Sensorauflagefläche (4) unmittelbar von einer beweglichen Laserquelle mittels eines steuerbaren Laserstrahls übertragen werden und dreidimensional in das Sensorwerkstück (1) eingebracht werden, oder auf die klebstofflaminierte Sensorauflagefläche (4) durch Zwischenschaltung von Masken mittelbar projiziert werden.

7. Verfahren gemäß Anspruch 6, wobei ein geometrisches Muster der Galerien (6), welche einer Vakuum- und/oder einer Luftgalerie entspricht, übertragen wird.

8. Verfahren gemäß Anspruch 7, wobei ein Querschnitt einer entsprechenden Galerie der Vielzahl von Galerien im Allgemeinen jeweils einem Querschnitt eines Rotationskörpers entspricht, welcher geradlinig an der Sensorauflagefläche (4) endet, was bevorzugt in einer parabolischen Form, deren Parabel sich in Richtung der Sensorauflagefläche (4) öffnet, ausgeführt ist, oder einer quadratischen oder rechteckigen Form, wobei der Galeriequerschnitt von der Sensorauflagefläche (7) ausgeschnitten wird, um sich geradlinig zu erweitern; wobei die Vielzahl von Galerien aus zumindest einer Vakuumgalerie und einer Luftgalerie besteht.

9. Verfahren gemäß Anspruch 6, wobei eine Abtragungstiefe (t) des durch den Transferkontaktklebstoff durchlaufenden und in das Sensorwerkstück (1) eindringenden Laserstrahls auf der Grundlage seiner Intensität und einer Bewegungsgeschwindigkeit der Laserquelle variiert.

10. Verfahren gemäß Anspruch 2 oder 6, wobei die Laserquelle dreidimensional versetzt wird und der Transferkontaktklebstoff mit einer frei wählbaren Schichtdicke mittels Nachführung der Laserquelle zu der Klebstoffaufbringung und/oder Vorziehen der Laserquelle zur Klebstoffaufbringung auf die Sensorauflagefläche (4) laminiert wird.

11. Verfahren gemäß Anspruch 1, wobei vor Schritt c) eine Grob- und/oder Feinreinigung des Körperbauteiloberflächenbereichs (3) durchgeführt wird.

12. Verfahren gemäß Anspruch 1, wobei Schritt d) mit einer Klemmvorrichtung durchgeführt wird, mittels deren externer Klemmung der zusammengefügten Teile ein definierter Anpressdruck (8) auf die Kontaktoberfläche eines jeden der zusammengefügten Teile, deren Vorderseiten einander gegenüberliegend sind, und auf die dazwischen geschichtete Klebstoffschicht (5) in einer Weise übertragen wird, dass ein gleichförmiger Kontakt des Sensorwerkstücks (1) gleichmäßig auf die Kontaktoberfläche (4) verteilt wird.

13. Verfahren gemäß Anspruch 1, wobei vor Schritt d) die Vielzahl von Galerien an einer Seite luftdicht verschlossen werden und an der anderen Seite mit einer Vakuumvorrichtung verbunden sind und sodann ein Vakuum in der Vielzahl von Galerien erzeugt wird.

14. Verfahren gemäß Anspruch 12 oder 13, wobei unter Verwendung der Klemmvorrichtung und der Vakuumvorrichtung der Anpressdruck (8) bis zu einem definierten Vakuum erhöht wird, welches für zumindest zehn Minuten aufrechterhalten wird.

15. Vakuumsensorapplikation für ein Structural Health Monitoring, aufweisend ein Körperbauteil (2), auf welchem ein Sensorwerkstück (1), auf welches auf einer ebenflächigen Sensorauflagefläche (4) eine Klebstoffschicht (5) laminiert und dort gleichmäßig verteilt aufgebracht ist, innerhalb eines bestimmten Bereichs einer ebenen Körperbauteiloberfläche positioniert ist und mit dem Körperbauteil (2) unlösbar verbunden ist, wobei geometrische Muster einer Vielzahl von ersten Galerien (61) von gleichmäßiger Konfiguration mit einem ersten Galeriequerschnitt (A1) und einer ersten Abtragungstiefe (t1), welche nebeneinander liegend laminar angeordnet sind, in das Sensorwerkstück (1) eingebracht werden, wobei die ersten Galerien (61) jeweils entlang einer Abtragungsachse (x) entfernt werden, welche senkrecht zu der Sensorwerkstückoberfläche (8) ist, und das geometrische Muster der einzelnen ersten Galerie (61), jeweils mit der in das klebstofflaminierte Sensorwerkstück (1) eingebrachten Struktur , in einer stufenförmigen Weise entlang der Abtragungsachse (x) mit einer dritten Abtragungstiefe (t3), welche der Dicke der Klebstoffschicht (5) und einem dritten Galeriequerschnitt (A3) entspricht, abgetragen wird, wobei die dritte Abtragungstiefe (t3) geringer oder gleich oder größer als die erste Abtragungstiefe (t1) ist, und der dritte Galeriequerschnitt (A3) größer als der erste Galeriequerschnitt (A1) ist.

16. Vakuumsensorapplikation gemäß Anspruch 15, wobei die geometrischen Muster einer Vielzahl von ersten Galerien (61) von im Wesentlichen gleichmäßiger Konfiguration mit dem ersten Galeriequerschnitt (A1) und der ersten Abtragungstiefe (t1), welche nebeneinander liegend laminar angeordnet sind, und geometrische Muster einer Vielzahl von zweiten Galerien (62) von gleichmäßiger Konfiguration mit einem zweiten Galeriequerschnitt (A2) und einer zweiten Abtragungstiefe (t2) in das Sensorwerkstück (1) eingebracht werden, wobei die ersten und zweiten Galerien (61, 62) jeweils entlang der Abtragungsachse (x) abgetragen werden, und die erste Abtragungstiefe (t1) größer ist als die zweite Abtragungstiefe (t2) und der zweite Galeriequerschnitt (A2) größer ist als der erste Galeriequerschnitt (A1), und das geometrische Muster der einzelnen zweiten Galerie (62) jeweils mit der in das klebstofflaminierte Sensorwerkstück (1) eingebrachten Struktur der Klebstoffschicht (5) entlang der Abtragungsachse (x) mit der dritten Abtragungstiefe (t3) abgetragen wird.

## Revendications

1. Procédé pour assembler solidement une pièce de détection à un composant de corps, dans lequel la pièce de détection (1) qui comporte un matériau de détection, est positionnée sur une zone de surface de composant de corps (3) du composant de corps (2) et est solidement assemblée au composant de corps, lequel procédé comporte les étapes consistant à :
a) laminer d'abord une couche d'adhésif (5) qui est produite par un adhésif réticulé de transfert par contact sur une surface de contact de détection (4) de la pièce de détection (1),
b) puis, en utilisant des procédés de rayonnement connus, transférer des motifs géométriques d'une pluralité de galeries (6) devant être disposées de manière laminaire sur la surface de contact de détection (4) par l'intermédiaire d'un faisceau lumineux qui pénètre dans l'adhésif de transfert par contact, qui sont ensuite introduites dans la pièce de détection (1) et, au cours du processus, sont retirées simultanément avec les structures de la couche d'adhésif (5) introduites dans la pièce de détection (1),
c) disposer ensuite la surface de contact de détection munie de motifs et d'adhésif laminé (4) sur une zone de surface définie de la surface de composant de corps (3), et
d) exercer ensuite une pression mécanique sur les deux partenaires assemblés, par laquelle la surface de contact de détection munie de motifs et d'adhésif laminé (4) et la zone de surface de composant de corps (3) sont pressées ensemble.

2. Procédé tel que revendiqué dans la revendication 1, dans lequel, selon l'étape a), la couche d'adhésif (5) est mise en oeuvre avec une épaisseur de couche constante définie, qui est laminée sur la surface de contact de détection (4).

3. Procédé tel que revendiqué dans les revendications 1 et 2, dans lequel l'étape a) est précédée d'un déroulement de l'adhésif de transfert par contact à partir d'un rouleau de transfert, lequel est acheminé jusqu'à un rouleau de laminage manuel, de telle sorte qu'après cela, le laminage de la couche d'adhésif (5) est mis en oeuvre avec ledit rouleau de laminage manuel avec lequel la couche d'adhésif (5) est roulée sur un côté de la pièce de détection (1) sous une légère pression contact de manière à empêcher des inclusions de bulles d'air entre la surface de contact de détection (4) et l'adhésif de transfert par contact.

4. Procédé tel que revendiqué dans la revendication 3, dans lequel à une étape e), l'opération de laminage est répétée avec un dispositif de laminage actionné électriquement, dans lequel l'adhésif de transfert par contact est déroulé à partir du film de transfert avec une vitesse de roulement définie jusqu'au dispositif de laminage actionné électriquement et est ensuite roulé sous une pression de contact définie (8) de manière à obtenir une adhérence homogène entre l'adhésif de transfert par contact et la surface de contact de détection (4).

5. Procédé tel que revendiqué dans la revendication 4, dans lequel à une étape f) ultérieure, la pièce de détection (1) avec la surface de contact de détection munie de motifs et d'adhésif laminé (4) est ensuite soumise à un recuit dans une étuve de séchage, au moyen de quoi l'adhérence est maximisée.

6. Procédé tel que revendiqué dans la revendication 1, dans lequel l'étape b) est mise en oeuvre en utilisant une lithographie au laser de manière à ce que les motifs géométriques de la pluralité de galeries (6) soient transférés sur la surface de contact de détection munie d'adhésif laminé (4) de manière directe à partir d'une source laser mobile au moyen d'un faisceau laser pouvant être commandé et sont introduits de manière tridimensionnelle dans la pièce de détection (1), ou sont projetés sur la surface de contact de détection munie d'adhésif laminé (4) de manière indirecte, avec l'interposition de masques.

7. Procédé tel que revendiqué dans la revendication 6, dans lequel un motif géométrique des galeries (6), qui correspondra à un vide et/ou à une galerie d'air, est transféré.

8. Procédé tel que revendiqué dans la revendication 7, dans lequel une section transversale d'une galerie respective de la pluralité de galeries correspond généralement à celle d'un corps de rotation qui se termine de manière rectiligne sur la surface de contact de détection (4), laquelle est de préférence mise en oeuvre avec une forme parabolique dont la parabole s'ouvre vers la surface de contact de détection (4), ou une forme carrée ou rectangulaire, la section transversale de galerie étant coupée à partir de la surface de contact de détection (7) de manière à s'étendre de manière rectiligne, dans lequel la pluralité de galeries est constituée d'au moins une galerie parmi une galerie sous vide et une galerie d'air.

9. Procédé tel que revendiqué dans la revendication 6, dans lequel une profondeur de retrait (t) du faisceau laser passant à travers l'adhésif de transfert par contact et pénétrant dans la pièce de détection (1) est changée sur la base de son intensité et d'une vitesse de déplacement de la source laser.

10. Procédé tel que revendiqué dans la revendication 2 ou 6, dans lequel la source laser est déplacée de manière tridimensionnelle et l'adhésif de transfert par contact est laminé sur la surface de contact de détection (4) avec une épaisseur de couche librement sélectionnable en suivant la source laser jusqu'à l'application d'adhésif et/ou en amenant la source laser jusqu'à l'application d'adhésif.

11. Procédé tel que revendiqué dans la revendication 1, dans lequel avant l'étape c), un nettoyage grossier et/ou fin de la zone de surface de composant de corps (3) est exécuté.

12. Procédé tel que revendiqué dans la revendication 1, dans lequel l'étape d) est mise en oeuvre avec un dispositif de serrage dont le serrage externe des deux partenaires assemblés transfère une pression de contact définie (8) aux surfaces de contact de chaque partenaire assemblé, dont les faces avant sont opposées l'une à l'autre, et à la couche d'adhésif (5) déposée au milieu, de manière à ce qu'un contact régulier de la pièce de détection (1) soit uniformément appliqué sur sa surface de contact (4).

13. Procédé tel que revendiqué dans la revendication 1, dans lequel avant l'étape d), la pluralité de galeries est fermée de manière étanche à l'air sur un côté et, de l'autre côté, est reliée à un dispositif de vide et du vide est ensuite généré à l'intérieur de la pluralité de galeries.

14. Procédé tel que revendiqué dans la revendication 12 ou 13, dans lequel, en utilisant le dispositif de serrage et le dispositif de vide, la pression de contact (8) est augmentée jusqu'à un vide défini, lequel est maintenu pendant au moins dix minutes.

15. Application de détection de vide pour une surveillance de la santé structurelle, comportant un composant de corps (2), sur lequel une pièce de détection (1), sur laquelle une couche d'adhésif (5) est laminée sur une surface de contact de détection régulière (4) et est placée sur celle-ci de manière à être répartie de manière homogène, est positionnée à l'intérieur d'une zone définie d'une surface de composant de corps régulière et est assemblée de manière non détachable au composant de corps (2), dans laquelle des motifs géométriques d'une pluralité de premières galeries (61) de configuration uniforme avec une première section transversale de galerie (A1) et une première profondeur de retrait (t1), qui sont agencées les unes à côté des autres de manière laminaire, sont introduits dans la pièce de détection (1), les premières galeries (61) dans chaque cas étant retirées le long d'un axe de retrait (x) qui est perpendiculaire à une surface de pièce de détection (8), et le motif géométrique de la première galerie individuelle (61), dans chaque cas avec la structure introduite dans la pièce de détection munie d'adhésif laminé (1), étant retiré de manière échelonnée le long dudit axe de retrait (x) avec une troisième profondeur de retrait (t3), laquelle correspond à l'épaisseur de la couche d'adhésif (5), et une troisième section transversale de galerie (A3), la troisième profondeur de retrait (t3) étant inférieure ou égale ou supérieure à la première profondeur de retrait (t1), et la troisième section transversale de galerie (A3) étant supérieure à la première section transversale de galerie (A1).

16. Application de détection de vide selon la revendication 15, dans laquelle les motifs géométriques d'une pluralité de premières galeries (61) de configuration sensiblement uniforme avec la première section transversale de galerie (A1) et la première profondeur de retrait (t1), qui sont agencées les unes à côté des autres de manière laminaire, et des motifs géométriques d'une pluralité de secondes galeries (62) de configuration uniforme avec une deuxième section transversale de galerie (A2) et une deuxième profondeur de retrait (t2) sont introduits dans la pièce de détection (1), les premières et secondes galeries (61, 62) dans chaque cas étant retirées le long de l'axe de retrait (x), et la première profondeur de retrait (t1) étant supérieure à la deuxième profondeur de retrait (t2) et la deuxième section transversale de galerie (A2) étant supérieure la première section transversale de galerie (A1), et le motif géométrique des secondes galeries individuelles (62), dans chaque cas avec la structure de la couche d'adhésif (5) introduite dans la pièce de détection munie d'adhésif laminé (1), étant retiré le long dudit axe de retrait (x) avec la troisième profondeur de retrait (t3).
